(19) Europäisches Patentamt
European Patent Office
Office européen des brevets

(11) **EP 3 527 865 B1**

(12) **FASCICULE DE BREVET EUROPEEN**

(45) Date de publication et mention de la délivrance du brevet:
**03.03.2021 Bulletin 2021/09**

(51) Int Cl.:
*F16K 31/42* *(2006.01)*      *F16K 11/048* *(2006.01)*
*F16K 11/07* *(2006.01)*

(21) Numéro de dépôt: **19166795.5**

(22) Date de dépôt: **13.07.2016**

(54) **VANNE FLUIDIQUE**

**FLÜSSIGKEITSVENTIL**

**FLUID VALVE**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.08.2015 BE 201505489**

(43) Date de publication de la demande:
**21.08.2019 Bulletin 2019/34**

(62) Numéro(s) de document de la (des) demande(s) initiale(s) en application de l'article 76 CBE:
**16179250.2 / 3 128 215**

(73) Titulaire: **Safran Aero Boosters S.A.**
**4041 Herstal (BE)**

(72) Inventeurs:
• **Frippiat, Cédric**
**4910 Theux (BE)**

• **Bomal, Jean - Christian**
**4633 Melen (BE)**
• **Paulus, Nicolas**
**4261 Latinne (BE)**

(74) Mandataire: **Gevers Patents**
**Intellectual Property House**
**Holidaystraat 5**
**1831 Diegem (BE)**

(56) Documents cités:
**EP-A1- 2 157 344**      **WO-A1-83/03455**
**WO-A1-2014/111096**      **GB-A- 1 526 630**
**GB-A- 2 119 481**      **GB-A- 2 343 935**
**GB-A- 2 417 546**      **JP-A- S6 131 783**
**US-A- 2 526 709**      **US-A- 4 150 695**
**US-A- 4 445 528**      **US-A1- 2010 301 248**
**US-A1- 2013 312 843**

## EP 3 527 865 B1

**Description**

**Domaine technique**

L'invention se rapporte à une vanne fluidique proportionnelle, par exemple à trois voies.

**Etat de la technique**

US2004/0163721 A1 décrit une vanne fluidique comprenant un actionneur électrique solénoïde. En injectant un courant électrique dans l'actionneur solénoïde, il est possible de déplacer un pilote appelé 'push pin' d'une première position à une deuxième position. Ce pilote, qui n'est pas ferromagnétique dans US2004/0163721 A1, est connecté à une armature ferromagnétique. Un membre de vanne mobile est connecté au pilote et permet de contrôler le passage de fluide entre les canaux d'entrée et de sortie de la vanne fluidique. US2004/0163721 A1 enseigne notamment au paragraphe [0015] que le membre de vanne est apte à se déplacer d'une manière équivalente au pilote.

La vanne décrite dans US2004/0163721 A1 présente des inconvénients. Pour certaines applications, il est souhaitable que le membre de vanne puisse décrire un grand mouvement ou une grande course. Une grande course du membre de vanne permet une régulation proportionnelle de plus gros débits. En effet, si l'on veut réguler un gros débit sur une petite course, on y perdrait en sensibilité (le même millimètre de course représenterait un delta de débit plus important). De plus, si la course n'est pas suffisante, le membre de vanne pourrait induire (même lorsque la vanne est totalement ouverte) des pertes de charge trop importantes. Or, on cherche généralement à limiter les pertes de charge aux bornes de la vanne et il faut donc que la course soit adaptée au débit qui y passe. Les applications pour lesquelles il vaut mieux adopter de grandes courses sont donc des applications de régulation proportionnelle à haut débit (par exemple à partir de 1500 L/h).

Pour la vanne de US2004/0163721 A1, certaines longues courses peuvent devenir inatteignables. D'autre part, avec ce système connu, plus la course requise du membre de vanne augmente, plus la masse de la vanne fluidique dans son entièreté augmente. Pour avoir des longues courses, il faut en effet prévoir un grand membre de vanne et/ou un grand pilote. Cela augmente le poids de la vanne fluidique. D'autre part, si les éléments mobiles (membre de vanne et pilote) sont grands, il faut alors prévoir en général un solénoïde (ou une bobine) de l'actionneur suffisamment grand pour qu'il soit apte à les déplacer : il faut prévoir un dispositif qui permet de créer une grande force sur le pilote. Il est alors souvent nécessaire de devoir alors injecter un courant électrique suffisamment important dans le solénoïde de manière à générer un champ magnétique suffisamment important pour déplacer les éléments mobiles tel le pilote. Or, pour certaines applications, par exemple aéronautiques, il est désiré d'avoir une vanne de taille et de poids limités et/ou de pouvoir utiliser un courant limité dans le solénoïde.

Le document US2526709A décrit un système de commande de servomoteurs à pression de fluide, dans lequel une soupape de commande de fluide sous pression comprend une bobine de soupape creuse mobile longitudinalement dans un boîtier pour contrôler les orifices à l'intérieur de celui-ci et une tige de commande mobile dans la bobine de soupape pour fermer, dans une position neutre, un orifice de fluide sous pression dans la bobine et pour admettre, lorsqu'elle est déplacée, du fluide sous pression depuis l'orifice vers l'une ou l'autre extrémité de la bobine pour la déplacer dans une direction correspondante.

**Résumé de l'invention**

Selon un premier aspect, un des buts de la présente invention est de fournir une vanne fluidique proportionnelle à actionneur électrique dont le membre de vanne peut décrire une grande course tout en limitant la masse de la vanne et le courant requis dans l'actionneur électrique.

A cet effet, les inventeurs proposent une vanne fluidique selon la revendication 1.

Avec la vanne fluidique de l'invention, un déplacement du pilote induit une différence de pression entre les première et deuxième cavités. Cette différence de pression donne naissance à une force de déplacement sur le membre de vanne. Si cette force est suffisante, elle permet de déplacer le membre de vanne. Comme cela est illustré dans la suite, il est possible d'obtenir un grand déplacement du membre de vanne, même si le pilote de déplace peu et/ou si la force exercée sur lui est faible. Cela est possible notamment grâce à l'existence des première et deuxième cavités définies au moins partiellement par le membre de vanne, à la communication du corps de vanne creux vers une pression externe et à la présence de la restriction fixe. Un déplacement du pilote, même petit et induit par une faible force, peut créer une différence de pression entre ces deux cavités qui est suffisante pour déplacer le membre de vanne selon une course importante. Ainsi, le pilote ne doit pas décrire un grand déplacement pour avoir une grande course du membre de vanne et il n'est pas nécessaire d'appliquer une grande force sur le pilote. La taille du pilote peut donc être réduite ce qui permet d'avoir une vanne fluidique de poids limité. Le pilote étant de taille réduite, il n'est pas nécessaire de prévoir un actionneur électrique très puissant. On peut donc réduire sa taille (et donc son poids), de même que le courant qui y est injecté pour déplacer le pilote. Finalement, la vanne fluidique selon l'invention permet d'avoir un membre de vanne décrivant une grande course tout en limitant le poids de la vanne fluidique et le courant requis dans l'actionneur électrique.

Avec la vanne fluidique de l'invention, il est possible d'avoir de grands déplacements (ou de grandes courses) du membre de vanne, même si le pilote décrit un petit déplacement. La vanne fluidique selon l'invention peut donc être vue comme une vanne d'amplification. Généralement, à partir de 4 mm de course du membre de vanne, un homme du métier parle de grande course. La masse de la vanne de l'invention peut être inférieure à 2 kg. De préférence, elle peut descendre à 1.5 kg, voire à 1 kg.

Avec la vanne fluidique de l'invention, un déplacement du membre de vanne n'est pas nécessairement identique au déplacement du pilote qui induit le déplacement du membre de vanne. Pour la vanne fluidique de l'invention, le pilote et le membre de vanne ne sont pas connectés mécaniquement en général. Pour certains modes de réalisation, le pilote et le membre de vanne ne sont jamais en contact.

L'actionneur électrique de la vanne fluidique selon l'invention ne nécessite pas un grand courant d'alimentation, même si l'on désire que le membre de vanne décrive de grandes courses. Par exemple, pour un actionneur électrique de type solénoïde, on peut utiliser un courant de 0 à 100 mA sur un bus 16-29 VDC, de préférence de type EEC-FADEC. Une faible puissance électrique peut donc suffire pour déplacer le membre de vanne selon une longue course. La vanne fluidique de l'invention n'est pas du type 'Direct Drive'. Les termes 'entrée' et 'sorties' du corps de vanne creux pourraient être inter changés. Cela n'est en effet fonction que du sens d'écoulement du fluide dont le débit est contrôlé par la vanne de l'invention. Ainsi, le corps de vanne pourrait contenir deux entrées et une sortie. De même, le corps de vanne pourrait comprend plus qu'une entrée et plus que deux sorties.

On entend par force de déplacement une force qui a un sens et une direction selon une direction de déplacement possible du membre de vanne mobile. Le pilote est parfois appelé plongeur par un homme du métier. La communication est apte à mettre en communication le creux du corps de vanne creux avec un pression de référence. Le terme 'restriction fixe' est connu d'un homme du métier. Différents types de restriction fixe peuvent être envisagés. Un exemple non limitatif est un orifice circulaire percé dans une paroi dont l'épaisseur est du même ordre de grandeur que son diamètre. D'autres exemples sont un coude, un rétrécissement de diamètre.

La vanne fluidique de l'invention présente d'autres avantages. Elle peut être moins chère que d'autres solutions existantes. Elle présente aussi de bonnes performances. Généralement, les vannes amplifiées hydrauliquement existantes (type servovalves) ne peuvent pas s'appliquer à de grandes courses. Si l'on fait passer un gros débit à travers une servovalve existante, ses performances seront affectées (perte de résolution, pertes de charge augmentées). Avec la vanne de l'invention, on peut obtenir une amplification tout en ayant de bonnes performances (résolution, précision, répétabilité). Ainsi, avec la vanne de l'invention, il est possible d'avoir les caractéristiques suivantes : précision en boucle ouverte de 10 % sur la position du membre de vanne, résolution de 5 % sur la position du membre de vanne, répétabilité de 2 % sur la position du membre de vanne. La vanne selon l'invention est en outre particulièrement simple et ne nécessite pas d'éléments de forme compliquée. Le principe d'amplification du mouvement du membre de vanne peut être important. L'interface de l'actionneur peut être une commande de type signal ordinateur (EEC-FADEC par exemple). La vanne fluidique selon l'invention peut être utilisée dans de nombreuses applications : dans un moteur d'un aéronef par exemple mais pas seulement.

Dans d'autres exemples de modes de réalisation, le membre de vanne définit au moins partiellement plus de deux cavités, par exemple trois, quatre. En général, un déplacement du pilote peut induire une variation de pression dans la première cavité. Dans d'autres exemples, le pilote peut aussi induire une variation de pression dans la deuxième cavité.

La vanne fluidique de l'invention est une vanne proportionnelle, terme connu de l'homme du métier. En conséquence, on arrive à contrôler le passage entre l'entrée et chacune des deux sorties sur toute la plage de course du membre de vanne. La vanne de l'invention n'est donc pas simplement une vanne ON-OFF, contrairement à la vanne décrite dans US4,445,528 (pour cette dernière, il y a une chute de pression dans une cavité plutôt qu'une variation progressive de pression). Avec la vanne de l'invention, il y a une infinité de positions stables pour le membre de vanne : elle permet donc un réel contrôle du débit de fluide entre l'entrée et les deux sorties, contrairement à US4,445,528 (cela est possible par un réel contrôle de la pression dans la première et/ou deuxième cavité). L'actionneur électrique de la vanne fluidique de l'invention peut être qualifié d'immergé, contrairement à la vanne de US2,526,709. Ainsi, si la vanne fluidique de l'invention permet de contrôler un débit d'huile, l'actionneur électrique est immergé dans de l'huile quand la vanne fluidique est en fonctionnement.

Selon une variante possible, le corps de vanne comprend deux communications, chacune d'entre elles étant apte à connecter de manière fluidique le creux du corps de vanne avec une pression externe , et la vanne fluidique comprend une restriction fixe dans (ou au niveau de) chaque communication de sorte qu'un déplacement dudit pilote mobile induise une variation de pression dans chacune desdites première et deuxième cavités pour créer une force de déplacement sur ledit membre de vanne pour faire varier une débit de fluide entre l'entrée et les deux sorties.

Comme communication permet donc de relier de manière fluidique le creux du corps de vanne à une cavité externe comprenant un fluide qui a une pression donnée. Chaque communication peut relier le creux à une même pression externe ou à deux pressions externes différentes.

Avec de mode de réalisation préféré, le contrôle du mouvement du membre de vanne est encore meilleur et l'amplification de la force agissant dessus peut être plus grande.

De préférence, la vanne fluidique de l'invention est configurée de sorte qu'un déplacement dudit pilote mobile induise une variation de pression pour créer une force sur ledit pilote de sens opposé audit déplacement. Cela permet d'avoir une vanne fluidique plus stable car il s'exerce sur le pilote une force de sens opposé à son déplacement.

Le pilote peut être connecté à un ressort.

De préférence, ladite communication vers ladite pression externe comprend un filtre. Cela permet de répondre à un besoin de fluide propre.

De préférence, le pilote a une symétrie de révolution.

La vanne fluidique selon l'invention permet de répartir un débit de fluidique entre deux voies (par exemple deux sorties) de manière proportionnelle, c'est-à-dire 50%-50%, grâce à un signal de commande de faible puissance qui peut être envoyé par un ordinateur. La vanne fluidique de l'invention peut être utilisée avec différents fluides comme par exemple : de l'huile, de l'huile moteur, du carburant. La vanne fluidique de l'invention pourrait être utilisée avec d'autres fluides. De préférence, la vanne fluidique de l'invention comprend un ou plusieurs filtres ou dispositifs anti-pollution (joints, chemins de fuite par exemple) pour diminuer les risques de blocage du membre de vanne. La vanne fluidique de l'invention peut être utilisée dans un circuit hydraulique d'un équipement d'un aéronef comme par exemple : circuit hydraulique d'un train d'atterrissage.

Les inventeurs proposent également un circuit hydraulique d'un équipement d'un aéronef (par exemple circuit hydraulique d'un train d'atterrissage), un système de pile à combustible, une turbomachine et un aéronef comprenant une ou plusieurs vannes fluidiques selon l'invention.

## Brève description des figures

Ces aspects ainsi que d'autres aspects de l'invention seront clarifiés dans la description détaillée de modes de réalisation particuliers de l'invention, référence étant faite aux dessins des figures, dans lesquelles:

- la Fig.1 montre un mode de réalisation possible d'une vanne fluidique;
- la Fig.2 montre un autre mode de réalisation de ladite vanne fluidique;
- la Fig.3 montre une vue rapprochée au niveau de l'actionneur électrique du mode de réalisation montré à la figure précédente;
- la Fig.4 montre un autre mode de réalisation de ladite vanne fluidique;
- la Fig.5 montre un autre mode de réalisation de ladite vanne fluidique;
- la Fig.6 montre un autre mode de réalisation de ladite vanne fluidique;
- la Fig.7 montre un autre mode de réalisation de ladite vanne fluidique;
- la Fig.8 montre un autre mode de réalisation d'une vanne fluidique selon l'invention;
- la Fig.9 montre un autre mode de réalisation d'une vanne fluidique ;
- la Fig.10 montre un autre mode de réalisation de ladite vanne fluidique.

Les dessins des figures ne sont pas à l'échelle. Généralement, des éléments semblables sont dénotés par des références semblables dans les figures. La présence de numéros de référence aux dessins ne peut être considérée comme limitative, y compris lorsque ces numéros sont indiqués dans les revendications.

## Description détaillée de certains modes de réalisation de l'invention

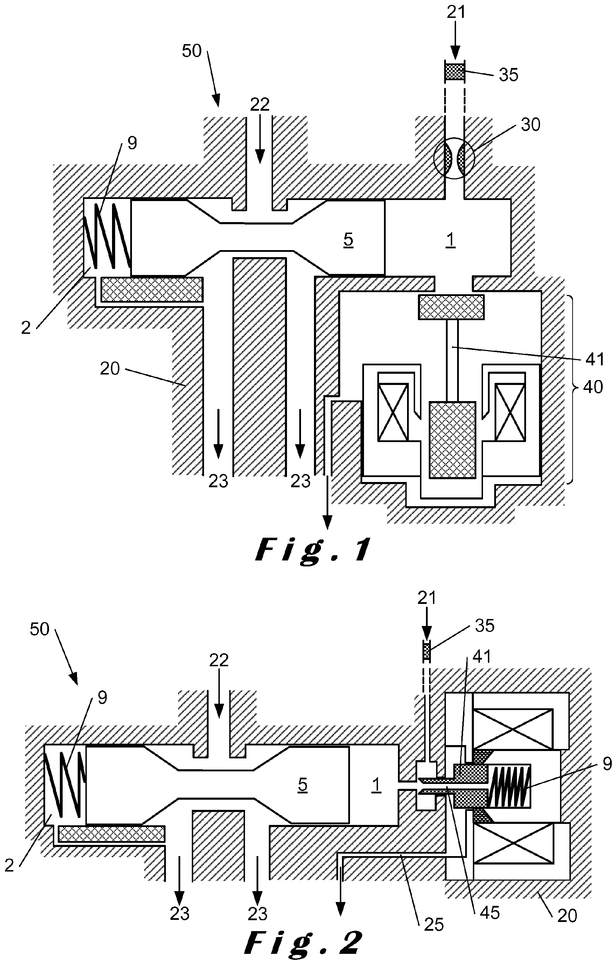

La figure 1 montre un exemple de mode de réalisation de la vanne fluidique 50. Elle comprend un corps de vanne 20 creux et trois voies : une entrée 22 et deux sorties 23. De préférence, la sortie 23 de gauche est une sortie de by-pass, terme connu d'un homme du métier. De préférence, la sortie 23 de droite est une sortie moteur. Le membre de vanne 5 ou tiroir est mobile dans le corps de vanne 20 creux. La forme du membre de vanne 5 par rapport au creux du corps de vanne 20 creux est telle qu'une variation de la position du membre de vanne 5 permet de varier un débit de fluide entre l'entrée 22 et une ou les deux sorties 23. Comme cela est montré à la figure 1, une extrémité du membre de vanne 5 est de préférence connectée ou reliée au corps de vanne 20 par l'intermédiaire d'un ressort 9. Le membre de vanne 5 définit une première cavité 1 à sa droite et une deuxième cavité 2 à sa gauche, au niveau du ressort 9. La deuxième cavité 2 est de préférence mise à la pression avale comme montré à la figure 1. La pression de la première cavité 1 est réglée via une communication 21 vers une pression de référence (ou pression externe) qui est ici une haute pression et via une communication vers une cavité comprenant l'actionneur électrique 40 qui elle-même comprend une sortie de by-pass. La communication 21 vers la pression externe comprend une restriction 30.

La vanne fluidique 50 comprend aussi un actionneur électrique solénoïde 40 comprenant une bobine et un pilote 41 mobile ferromagnétique. En injectant un courant électrique dans la bobine de l'actionneur électrique 40, le pilote 41 ferromagnétique se déplace en général pour diminuer la réluctance (terme connu d'un homme du métier) ou de manière équivalente l'énergie magnétique globale.

Pour l'exemple de la figure 1, lorsqu'un courant électrique s'écoule dans la bobine de l'actionneur solénoïde, le pilote 41 se déplace vers le haut, diminuant la communication entre la première cavité 1 et la sortie de by-pass (configuration montrée à la figure 1). La pression dans la première cavité 1 augmente alors car le pilote 41 empêche l'équilibrage de pression entre la première cavité 1 et la sortie de bypass. La pression de la deuxième cavité 2 étant la même que la pression de la sortie de bypass, il apparaît une différence de pression entre les première 1 et deuxième 2 cavités. Cela induit une force de déplacement vers la gauche sur le membre de vanne 5. Si cette force de déplacement est suffisamment importante, le membre de vanne 5 se déplace vers la gauche. Si la haute pression ou pression externe via la communication 21 diminue, la force exercée par l'actionneur 41 reste constante car elle ne dépend que du courant circulant dans sa bobine. La restriction 30 se resserrera alors pour maintenir la pression dans la première cavité.

La figure 2 montre un autre mode de réalisation de la vanne fluidique 50. Comme cela est illustré sur cette figure, la vanne fluidique 50 comprend de préférence un filtre 35 en amont de la communication 21 pour répondre à un besoin d'huile propre. En effet, le fluide de pression de référence, par exemple une haute pression, peut être de l'huile moteur par exemple comprenant beaucoup de particules qui pourraient se coincer dans les restrictions. Il est important de filtrer ces particules qui pourraient encrasser la vanne fluidique 50.

La deuxième cavité 2 a en général une basse pression mentionnée par LP dans la suite. La cavité 1 a en général une moyenne pression mentionnée par MP dans la suite. La pression de référence en amont de la communication 21 a en général une haute pression mentionnée par HP dans la suite. La pression importante pour le fonctionnement de la vanne fluidique 50 est la pression MP de la première cavité 1 ou cavité d'amplification. La différence entre MP et LP définit la force de déplacement qui peut s'exercer sur le membre de vanne 5 mobile. Ce dernier est connecté à un ressort.

Dans le mode de réalisation de la figure 2, le pilote 41 de l'actionneur solénoïde 40 est relié à un ressort 9 qui plaque le pilote 41 contre son siège à gauche en l'absence de force magnétique exercée par la bobine de l'actionneur solénoïde 40. Quand le pilote 41 est dans cette position, la pression MP de la première cavité 1 est égale à la pression de sortie de vanne par fuite dans les jeux d'usinage et vu le trou longitudinal 45 dans le pilote 41. Les jeux d'usinage (ou passage entre le pilote 41 et une paroi cylindrique l'entourant) constituent la restriction fixe 30.

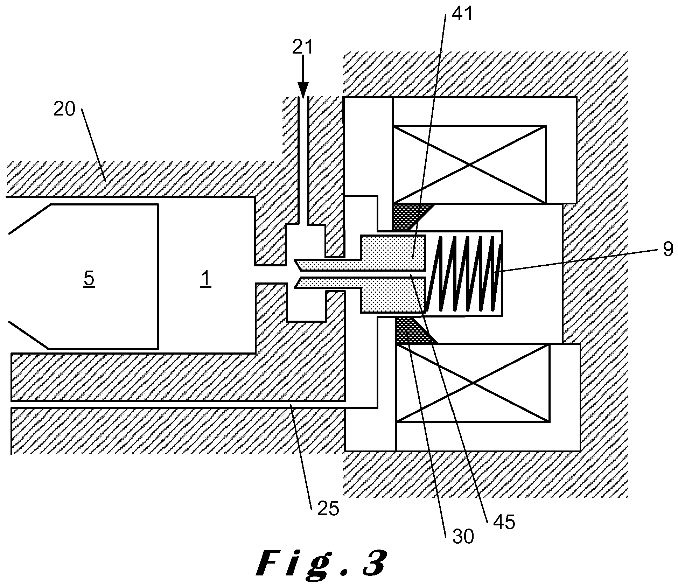

Lorsque l'actionneur solénoïde 40 impose une force sur le pilote 41, elle est telle qu'elle l'attire vers la droite. Un fluide (par exemple de l'huile) à une pression HP pénètre alors dans le trou longitudinal 45 du pilote 41 pour atteindre une cavité où se trouve le ressort 9 relié au pilote 41. Lorsque la pression MP devient assez grande, elle va venir refermer le pilote 41 contre son siège car une partie du pilote 41 est soumis à la pression de sortie LP qui est plus faible (voir figure 3 par exemple). Au final, la pression dans la première cavité 1 et dans la cavité du ressort 9 du pilote 41 sont égales vu le trou longitudinal 45 du pilote 41. La pression de la deuxième cavité 2, LP, est égale à la pression de sortie de vanne qui est inférieure. Finalement une force de déplacement vers la gauche s'applique sur le membre de vanne 5.

En référence à la figure 3, les différentes forces qui s'exercent sur le pilote 41 sont :

- la force du ressort 9 s'appliquant sur le pilote 41. Dans l'exemple des figures 2 et 3, cette force s'applique vers la gauche (ressort 9 en compression). Cela permet de repousser le pilote 41 contre son siège quand il n'y a pas de courant dans la bobine de l'actionneur solénoïde 40 et pas d'augmentation de pression dans la cavité comprenant le ressort 9. Le ressort 9 connecté au pilote 41 n'est pas nécessaire puisque la pression hydraulique qui est toujours présente poussera toujours le pilote 41 vers la gauche. Si un ressort 9 est connecté au pilote 41 comme cela est montré aux figures 2 et 3, on choisira de préférence un ressort 9 avec une constante de raideur modérée car la force magnétique exercée par la bobine de l'actionneur solénoïde 41 sur le pilote 41 ferromagnétique doit pouvoir vaincre la force exercée par le ressort 9.
- La force magnétique générée sur le pilote 41 ferromagnétique par la bobine de l'actionneur solénoïde 40, dirigée vers la droite.
- Les efforts de pression. Concernant la pression de référence HP, elle s'applique sur tout le contour du pilote 41 qui a une forme cylindrique. Les efforts s'annulent donc entre eux.

Si l'on considère que les efforts dirigés vers la droite sont négatifs et ceux vers la gauche positifs, on obtient alors :

$$-MP*S_1 - LP*(S_2-S_1) + MP*S_2 = (MP-LP)*(S_2-S_1)$$

La surface S1 (respectivement S2) est la surface verticale de l'extrémité gauche (respectivement droite) du

pilote 41. Puisque $S_2$ est supérieure à $S_1$ et que MP est plus grand que LP, les efforts de pression tendent à être positifs et donc à être dirigées vers la gauche (tendent à fermer le pilote 41).

Finalement, le pilote 41 est en équilibre lorsque la force magnétique égale la somme entre les efforts de pression et l'effort du ressort 9 (qui est en en général négligeable pour les raisons invoquées plus haut). On obtient:

$$(MP\text{-}LP)^*(S2\text{-}S1) + Fressort = Fmagnétique$$

(MP-LP) et (S2-S1) étant en général constants.

On remarque alors que la pression MP est uniquement définie par la force délivrée par le solénoïde et ceci indépendamment de la pression HP (mais pas de LP). Cependant, LP peut offrir daventage de constance que HP car directement liée à un réservoir, par exemple.

Le ressort 9 connecté au pilote 41 n'est pas nécessaire. En l'absence d'un tel ressort 9, il convient de prévoir une butée (amagnétique de préférence) à droite du pilote 41 afin qu'il y ait toujours une pression hydraulique à droite de lui qui peut le repousser à refermer la restriction vers la première cavité 1.

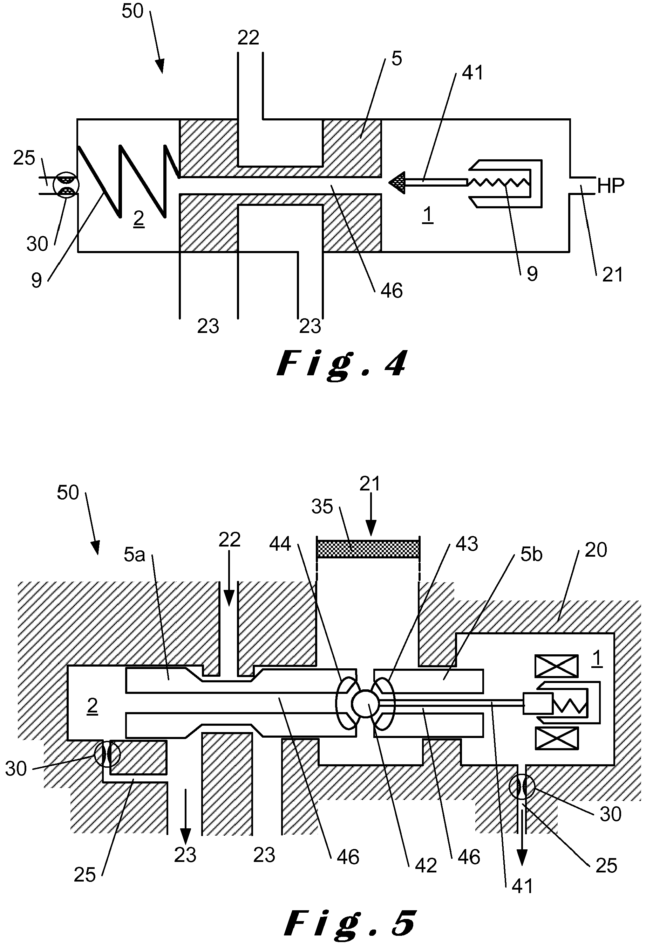

La figure 4 montre un autre mode de réalisation possible de la vanne fluidique 50. Comme les autres modes de réalisation, le concept de base est la modulation de la pression d'une cavité au travers d'une restriction fixe (30) et une restriction variable (induite par le pilote 41). Le membre de vanne 5 mobile est toujours repoussé vers le pilote 41 grâce à l'action d'un ressort 9 connecté au membre de vanne 5. Cela engendre une répartition des pressions hydraulique de sorte que le membre de vanne 5 ne touche pas le pilote 41 et reste toujours légèrement sur sa gauche. Lorsque le courant dans la bobine de l'actionneur électrique solénoïde 40 augmente, le pilote 41 va se mouvoir vers la gauche, créant une chute de pression dans la deuxième cavité 2 qui contient le ressort 9 (la deuxième cavité 2 est reliée à une pression externe via la communication 25 qui comprend une restriction fixe 30). Le pilote 41 est en effet apte à obturer au moins partiellement le trou longitudinal 46 du membre de vanne 5 qui peut mettre en communication première 1 et deuxième 2 cavités. Le mouvement du pilote 41 vers la gauche induit donc un mouvement aussi vers la gauche du membre de vanne 5. Le mouvement du pilote 41 vers la gauche peut aussi induire une augmentation de pression dans la première cavité 1 ayant aussi pour effet de déplacer le membre de vanne 5 vers la gauche.

Un avantage du mode de réalisation de la figure 4 est que si HP augmente soudainement, la restriction variable du trou longitudinal 46 du membre de vanne 5 va s'ouvrir, ce qui va également augmenter la pression dans la deuxième cavité 2, et qui compensera la variation de pression HP de sorte que le membre de vanne 5 ne s'en retrouve pas trop affecté.

La figure 5 montre un autre mode de réalisation possible de la vanne fluidique 50. Comme cela est montré à la figure 5, le membre de vanne 5 mobile n'est pas relié à un ressort 9 pour ce mode de réalisation. De préférence, la communication 21 vers une pression de référence ou pression externe (haute pression par exemple) comprend un filtre 35. Comme on peut le voir sur la figure, le corps de vanne 20 comprend ici deux communications 25 vers une pression externe (ici vers une même pression avale). Chacune de ces deux communications 25 comprend une restriction fixe 30.

Dans le mode de réalisation de la figure 5, le pilote 41 comprend un élément 42 ayant la forme d'une bille ou protubérance ronde. Le membre de vanne 5 comprend deux parties (5a, 5b) couplées mécaniquement. Chacune des deux parties (5a, 5b) est percée d'un trou longitudinal 46 pour mettre en communication première 1 et deuxième 2 cavités lorsque les trous longitudinaux 46 ne sont pas obturés. L'élément 42 du pilote 41 est apte à obturer au moins partiellement le trou longitudinal 46 d'une ou des deux parties (5a, 5b) du membre de vanne 5 (restriction variable). Quand l'actionneur électrique 40 est activé, le pilote 41 se déplace vers la gauche (ressort couplé au pilote 41 en traction dans cet exemple). La section 44 de la partie 5a gauche du membre de vanne 5 est alors au moins partiellement obturée, tandis que la section 43 de la partie 5b de droite l'est moins. La perte de charge au travers de la section 44 est donc plus importante qu'au travers de la section 43. La pression dans la première cavité 1 augmente vu la configuration de la communication 21 alors que celle de la deuxième cavité 2 diminue. Les deux parties (5a, 5b) du membre de vanne 5 se déplacent donc vers la gauche.

Le membre de vanne 5 atteint son équilibre lorsque le pilote 41 atteint la position imposée par la force de l'actionneur électrique 40. Dans ce cas, on a équilibre de pression entre les deux cavités (1, 2). Ce mode de réalisation a l'avantage d'être indépendant des variations de pression d'amplification et d'alimentation puisqu'il répartit la pression HP amenée via la communication 21 dans les première 1 et deuxième 2 cavités. L'avantage de ce mode de réalisation est sa vitesse de réaction : transition rapide.

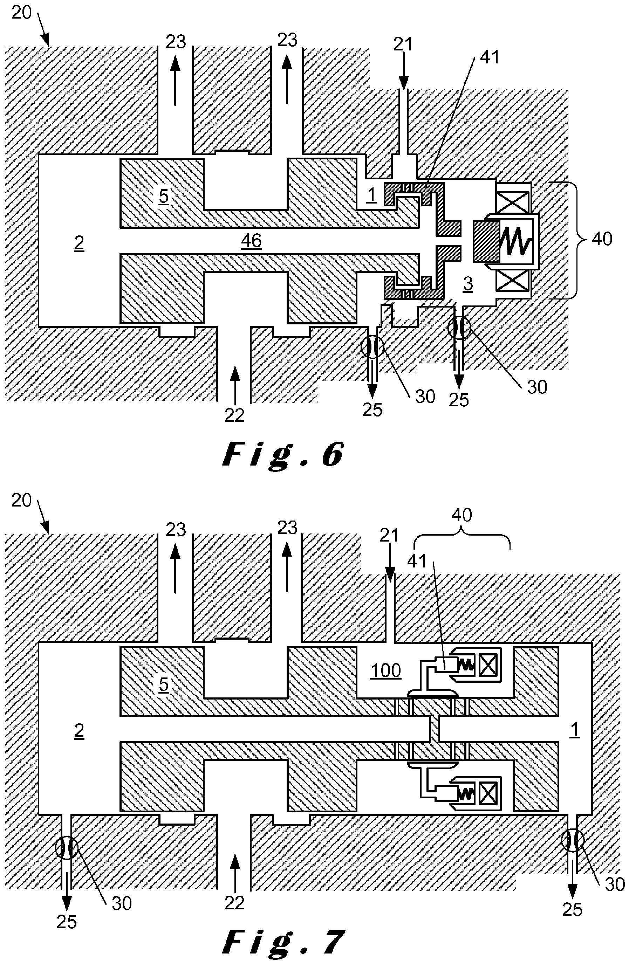

La figure 6 montre une version plus stable que la précédente. Ici, la première cavité 1 comprend une partie du pilote 41 mobile, tandis qu'il existe de part et d'autre du membre de vanne 5 une deuxième 2 et troisième 3 cavités qui sont tout le temps à la même pression par l'intermédiaire d'un trou longitudinal 46 dans le membre de vanne 5 et une partie du pilote 41. Quand un courant est injecté dans l'actionneur électrique solénoïde 40, le pilote 41 bouge vers la droite (ressort du pilote en compression ici). La pression dans la première cavité 1 diminue et ainsi p(cavité 2)-p(cavité 1) devient positif entraînant un mouvement vers la droite du membre de vanne 5. Ce déséquilibre de pression exerce sur le pilote 41 une force vers la gauche. Le système est donc stable car la différence de pression prenant naissance par le mouvement du pilote 41 le ralentit, le stabilise. Comme cela est illustré à la figure 6, les première 1 et deuxième 2 cavités sont reliées vers une pression externe (basse pression par exemple) via deux communications 25, chacune comprenant une restriction fixe 30.

La figure 7 montre une version équilibrée de la vanne fluidique 50. Le creux du corps de vanne 20 comprend une cavité 100 comprenant l'actionneur 40 et une communication 21 (sans restriction fixe 30) vers une pression de référence (par exemple une haute pression). L'actionneur 40 est donc soumis à une pression constante égale à cette pression de référence, indépendamment de sa position. Le système est dit équilibré. Comme cela est illustré à la figure 7, les première 1 et deuxième 2 cavités sont reliées vers une pression externe (basse pression par exemple) via deux communications 25, chacune comprenant une restriction fixe 30.

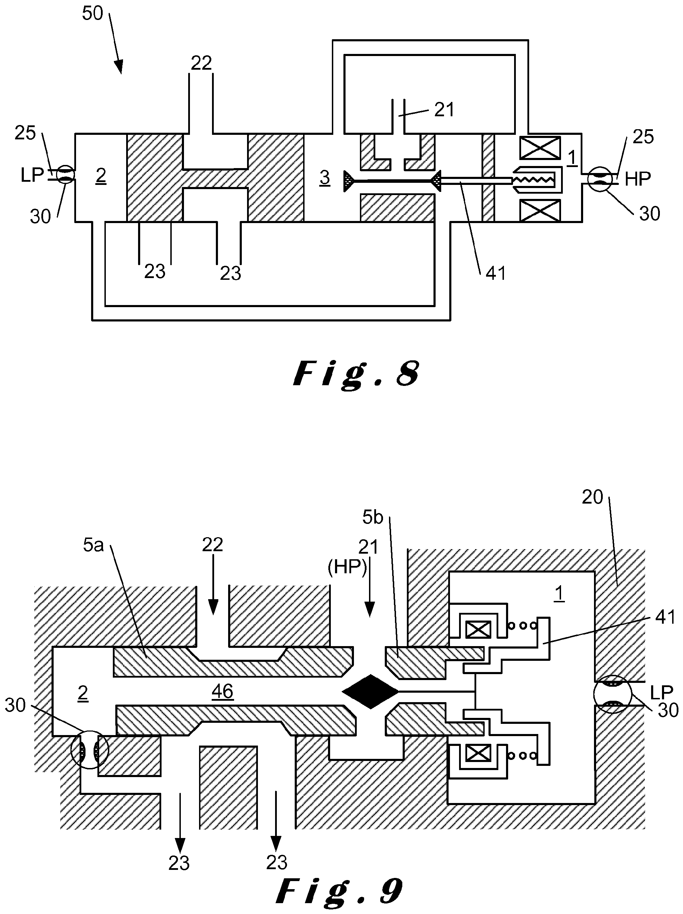

La figure 8 montre une autre version particulièrement stable de la vanne fluidique 50. Ici, le membre de vanne 5 comprend trois parties couplées mécaniquement (zones hachurées). La pression de référence amenée par la communication 21 dans le creux du corps de vanne 20 est de préférence une haute pression HP. La première cavité est reliée à une haute pression via une communication 25 comprenant une restriction fixe 30. Quand l'actionneur électrique 40 est activé, le pilote 41 se déplace vers la gauche. Cela va augmenter la pression dans la troisième cavité 3 où se trouve l'extrémité gauche (ou protubérance gauche) du pilote 41. Dans le même temps, la pression dans la cavité située entre la troisième cavité 3 et la première cavité 1 et où se trouve la protubérance droite du pilote 41 diminue ou reste constante car cette cavité est en communication avec LP par l'intermédiaire de la deuxième cavité 2 qui elle-même est reliée à une pression externe LP via une communication 25 qui comprend une restriction fixe 30. Au final, la force hydraulique s'appliquant sur le pilote 41 est dirigée vers la droite, c'est-à-dire dans un sens opposé à son déplacement induit par la bobine de l'actionneur solénoïde 40. Cela augmente la stabilité de la vanne fluidique 50.

La figure 9 montre un autre mode de réalisation de la vanne fluidique 50. Le membre de vanne 5 comprend deux parties (5a, 5b). Ce mode de réalisation se rapproche de celui montré à la figure 5. Une différence réside dans le fait que l'actionneur électrique solénoïde 40 est apte ici à exercer une force magnétique de déplacement sur le membre de vanne 5 car la partie de droite 5b comprend un matériau ferromagnétique et une portion de la partie de droite 5b se situe dans les lignes de champs magnétiques générées par le solénoïde de l'actionneur lorsque ce dernier est activé. Quand il est activé, le pilote 41 qui comprend aussi un matériau ferromagnétique et la partie de droite 5b du membre de vanne 5 se rapproche pour diminuer l'énergie magnétique globale. Cela a pour effet de plus obturer le trou longitudinal 46 de la partie gauche 5a que celui de la partie de droite, induisant un mouvement vers la gauche du membre de vanne 5. La pression de référence amenée par la communication 21 est de préférence un haute pression HP. L'actionneur électrique 40 de la vanne fluidique de la figure 9 pourrait être qualifié d'actionneur électrique 40 biplongeur ou bipilote par la présence du pilote 41 et de la partie 5b qui peuvent bouger suite à la présence d'un courant dans la bobine de l'actionneur solénoïde 40.

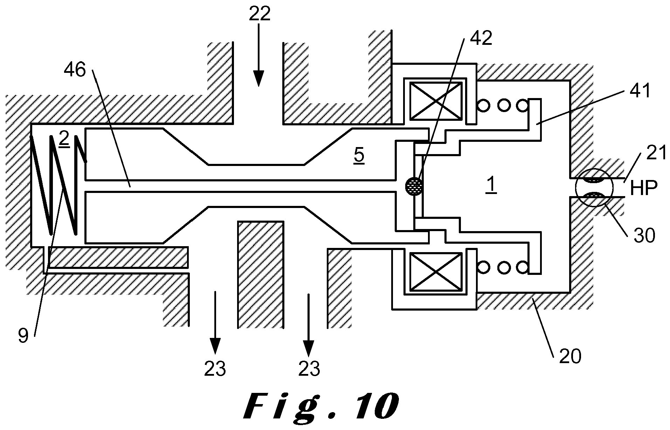

La figure 10 montre un autre mode de réalisation de la vanne fluidique 50 où le membre de vanne 5 comprend par contre un trou longitudinal 46 qui peut être obturé au moins partiellement par un élément 42 du pilote 41, ayant la forme d'une bille à la figure 10. Le membre de vanne 5 est connecté au corps de vanne 2 creux par l'intermédiaire d'un ressort 9. Ce ressort 9 se trouve dans une deuxième cavité 2 reliée à une sortie 23 par l'intermédiaire d'un canal. Une première cavité 1 comprenant l'actionneur solénoïde 40 peut être connectée à une source de pression de référence, par exemple une haute pression HP, par l'intermédiaire d'une communication 21 qui comprend une restriction fixe 30.

La présente invention a été décrite en relation avec des modes de réalisations spécifiques, qui ont une valeur purement illustrative et ne doivent pas être considérés comme limitatifs. D'une manière générale, la présente invention n'est pas limitée aux exemples illustrés et/ou décrits ci-dessus. L'usage des verbes « comprendre », « inclure », « comporter », ou toute autre variante, ainsi que leurs conjugaisons, ne peut en aucune façon exclure la présence d'éléments autres que ceux mentionnés. L'usage de l'article indéfini « un », « une », ou de l'article défini « le », « la » ou « l' », pour introduire un élément n'exclut pas la présence d'une pluralité de ces éléments. Les numéros de référence dans les revendications ne limitent pas leur portée.

## Revendications

1. Vanne fluidique (50) proportionnelle pour un circuit hydraulique d'un équipement d'un aéronef et comprenant :

    - un corps de vanne (20) creux comprenant une entrée (22), deux sorties (23) et trois communications (21 ; 25), chacune d'entre elles étant apte à connecter de manière fluidique le creux du corps de vanne (20) vers une pression externe ;
    - un actionneur électrique solénoïde (40) situé dans le creux du corps de vanne (20) creux et comprenant un pilote (41) mobile ferromagnétique connecté à un ressort (9) ;

- un membre de vanne (5) mobile, apte à décrire une course dans le creux du corps de vanne (20), et comprenant trois parties couplées mécaniquement, ledit membre de vanne (5) définissant au moins partiellement une première (1) et une deuxième (2) cavités situées de part et d'autre dudit membre de vanne (5) dans le creux du corps de vanne (20), ledit membre de vanne (5) définissant aussi au moins partiellement une troisième (3) et une quatrième cavités dans le creux du corps de vanne (20) situées entre lesdites première (1) et une deuxième (2) cavités, lesdites première (1), deuxième (2), troisième (3) et quatrième cavités étant chacune délimitées au moins partiellement par certaines desdites trois parties dudit membre de vanne (5) de sorte que :

o une première des trois parties délimite au moins partiellement ladite deuxième (2) et ladite troisième (3) cavités, ladite première des trois parties étant mobile dans le corps de vanne (20) pour obturer au moins partiellement un passage entre ladite entrée (22) et une des deux sorties (23) ;
o une deuxième des trois parties délimite au moins partiellement lesdites troisième (3) et quatrième cavité, comprend un trou longitudinal pour mettre en communication fluidique les troisième (3) et quatrième cavités, ledit pilote (41) comprenant une protubérance située dans la troisième cavité (3) et une protubérance dans la quatrième cavité;
o une troisième des trois parties délimite au moins partiellement lesdites première (1) et quatrième cavités,

ladite vanne fluidique (50) comprenant en outre :

- un premier conduit pour connecter fluidiquement lesdites deuxième (2) et quatrième cavités,
- un deuxième conduit pour connecter fluidiquement lesdites première (1) et troisième (3) cavités,

lesdits premier et deuxième conduits étant connectés fluidiquement par ledit trou longitudinal traversant ladite deuxième des trois parties, lorsque celui-ci n'est pas obturé,
ladite première cavité (1) contenant ledit actionneur électrique solénoïde (40) ; ladite première cavité (1) est connectée à une pression externe par une communication (25) comprenant une restriction fixe (30) ;
ladite deuxième cavité (2) est connectée à une pression externe par une communication (25) comprenant une restriction fixe (30) ;
ladite troisième cavité (3) est connectée à une pression externe par une communication (21);
ladite vanne fluidique (50) étant configuré de sorte qu'un déplacement dudit pilote (41) mobile dans la troisième cavité (3) induise une variation de pression dans chacune desdites première (1) et deuxième (2) cavités par l'intermédiaire des deuxième et premier conduits respectivement pour créer une force de déplacement sur ledit membre de vanne (5) pour faire varier un débit de fluide entre l'entrée (22) et les deux sorties (23).

2. Vanne fluidique (50) selon la revendication précédente **caractérisée en ce qu'**elle est configurée de sorte qu'un déplacement dudit pilote (41) mobile induise une variation de pression pour créer une force sur ledit pilote (41) de sens opposé audit déplacement.

3. Circuit hydraulique d'un équipement d'un aéronef comprenant une vanne fluidique (50) selon l'une quelconque des revendications précédentes

4. Système de pile à combustible comprenant une vanne fluidique (50) selon l'une quelconque des revendications 1 à 2.

5. Turbomachine d'aéronef comprenant une vanne fluidique (50) selon l'une quelconque des revendications 1 à 2.

6. Aéronef comportant une vanne fluidique (50) selon l'une quelconque des revendications 1 à 2.

**Patentansprüche**

1. Flüssigkeitsproportionalventil (50) für einen Hydraulikkreislauf einer Ausstattung eines Luftfahrzeugs, das umfasst:

- einen hohlen Ventilkörper (20), der einen Einlass (22), zwei Auslässe (23) und drei Kommunikationen (21; 25) umfasst, die jeweils geeignet sind, die Aushöhlung des Ventilkörpers (20) zu einem Außendruck fluidisch zu verbinden;
- einen elektrischen Solenoidaktuator (40), der sich in der Aushöhlung des Ventilkörpers (20) befindet und ein ferromagnetisches bewegliches Führungselement (41), das mit einer Feder (9) verbunden ist, umfasst;
- ein bewegliches Ventilelement (5), das dazu geeignet ist, einen Hub in der Aushöhlung des Ventilkörpers (20) zu beschreiben, und drei Teile, die mechanisch gekoppelt sind, umfasst, wobei das Ventilelement (5) mindestens teilweise einen ersten (1) und einen zweiten (2) Hohlraum definiert, die zu beiden Seiten des Ventilelements (5) in der Aushöhlung des Ventilkörpers (20) liegen, wobei das Ventilelement (5) auch mindestens teilweise einen dritten (3) und einen vierten Hohlraum in der Aushöhlung des Ventilkörpers (20) definiert, die zwischen dem ersten (1) und einem zweiten (2) Hohlraum liegen, wobei der erste (1), zweite (2), dritte (3), und vierte Hohlraum jeweils mindestens teilweise von bestimmten der drei Teile des Ventilelements (5) derart abgegrenzt sind, dass:

o ein erster der drei Teile mindestens teilweise den zweiten (2) und den dritten (3) Hohlraum abgrenzt, wobei der erste der drei Teile in dem Ventilkörper (20) beweglich ist, um mindestens teilweise einen Durchgang zwischen dem Einlass (22) und einem der zwei Auslässe (23) zu verschließen;

o ein zweiter der drei Teile mindestens teilweise den dritten (3) und vierten Hohlraum abgrenzt, ein Längsloch umfasst, um den dritten (3) und vierten Hohlraum in Fluidverbindung zu versetzen, wobei das Führungselement (41) einen Vorsprung, der in dem dritten Hohlraum (3) liegt, und einen Vorsprung in dem vierten Hohlraum umfasst;

o ein dritter der drei Teile mindestens teilweise den ersten (1) und vierten Hohlraum abgrenzt,

wobei das Flüssigkeitsventil (50) weiter umfasst:

- eine erste Leitung, um den zweiten (2) und vierten Hohlraum fluidisch zu verbinden,
- eine zweite Leitung, um den ersten (1) und dritten (3) Hohlraum fluidisch zu verbinden,

wobei die erste und die zweite Leitung fluidisch durch das Längsloch, das den zweiten der drei Teile durchquert, verbunden sind, wenn dieses nicht verschlossen ist,

wobei der erste Hohlraum (1) den elektrischen Solenoidaktuator (40) enthält;

wobei der erste Hohlraum (1) mit einem Außendruck durch eine Kommunikation (25), die eine fixe Einschnürung (30) umfasst, verbunden ist;

wobei der zweite Hohlraum (2) mit einem Außendruck durch eine Kommunikation (25), die eine fixe Einschnürung (30) umfasst, verbunden ist;

wobei der dritte Hohlraum (3) mit einem Außendruck durch eine Kommunikation (21) verbunden ist;

wobei das Flüssigkeitsventil (50) derart konfiguriert ist, dass eine Verlagerung des beweglichen Führungselements (41) in dem dritten Hohlraum (3) eine Druckvariation in jedem des ersten (1) und des zweiten (2) Hohlraums über eine zweite bzw. eine erste Leitung induziert, um eine Verlagerungskraft auf das Ventilelement (5) zu schaffen, um einen Fluiddurchfluss zwischen dem Einlass (22) und den zwei Auslässen (23) variieren zu lassen.

2. Flüssigkeitsventil (50) nach dem vorstehenden Anspruch, **dadurch gekennzeichnet, dass** es derart konfiguriert ist, dass eine Verlagerung des beweglichen Führungselements (41) eine Druckvariation induziert, um eine Kraft auf das Führungselement (41) mit entgegengesetzter Richtung zu der Verlagerung zu schaffen.

3. Hydraulikkreislauf einer Ausstattung eines Luftfahrzeugs, der ein Flüssigkeitsventil (50) nach einem der vorstehenden Ansprüche umfasst.

4. Brennstoffzellensystem, das ein Flüssigkeitsventil (50) nach einem der Ansprüche 1 bis 2 umfasst.

5. Luftfahrzeug-Turboluftstrahltriebwerk, das ein Flüssigkeitsventil (50) nach einem der Ansprüche 1 bis 2 umfasst.

6. Luftfahrzeug, das ein Flüssigkeitsventil (50) nach einem der Ansprüche 1 bis 2 umfasst.

**Claims**

1. Proportional fluid valve (50) for a hydraulic circuit of a piece of equipment of an aircraft and comprising:

- a hollow valve body (20) comprising an inlet (22), two outlets (23) and three communications (21; 25), each one of them being able to fluidically connect the hollow of the valve body (20) towards an external pressure;
- a solenoid electrical actuator (40) located in the hollow of the hollow valve body (20) and comprising a movable ferromagnetic pilot (41) connected to a spring (9);
- a movable valve member (5), able to describe a travel in the hollow of the valve body (20), and comprising three mechanically coupled portions, said valve member (5) defining at least partially a first (1) and a second (2) cavity located on either side of said valve member (5) in the hollow of the valve body (20), said valve member (5) also defining at least partially a third (3) and a fourth cavity in the hollow of the valve body (20) located between said first (1) and a second (2) cavity, said first (1), second (2), third (3) and fourth cavities each being delimited at least partially by some of said three portions of said valve member (5) in such a way that:

o a first of the three portions delimits at least partially said second (2) and said third (3) cavities, said first of the three portions being movable in the valve body (20) to block at least partially a passage between said inlet (22) and one of the two outlets (23);

o a second of the three portions delimits at least partially said third (3) and fourth cavities, comprises a longitudinal hole to place in fluidic communication the third (3) and fourth cavities, said pilot (41) comprising a protuberance located in the third cavity (3) and a protuberance in the fourth cavity;

o a third of the three portions delimits at least partially said first (1) and fourth cavities,

said fluid valve (50) further comprising:
- a first conduit to fluidically connect said second (2) and fourth cavities,
- a second conduit to fluidically connect said first (1) and third (3) cavities,

said first and second conduits being fluidically connected by said longitudinal hole passing through said second of the three portions, when the latter is not blocked,
said first cavity (1) containing said solenoid electrical actuator (40); said first cavity (1) is connected to an external pressure by a communication (25) comprising a fixed restriction (30);
said second cavity (2) is connected to an external pressure by a communication (25) comprising a fixed restriction (30);
said third cavity (3) is connected to an external pressure by a communication (21);
said fluid valve (50) being configured in such a way that a movement of said movable pilot (41) in the third cavity (3) induces a variation in pressure in each one of said first (1) and second (2) cavities by means of the second and first conduits respectively to create a movement force on said valve member (5) to vary a flow rate of fluid between the inlet (22) and the two outlets (23).

2. Fluid valve (50) according to the preceding claim, **characterised in that** it is configured in such a way that a movement of said movable pilot (41) induces a pressure variation to create a force on said pilot (41) in the direction opposite to said movement.

3. Hydraulic circuit of a piece of equipment of an aircraft comprising a fluid valve (50) according to any one of the preceding claims.

4. Fuel cell system comprising a fluid valve (50) according to any one of claims 1 to 2.

5. Aircraft turbine engine comprising a fluid valve (50) according to either one of claims 1 to 2.

6. Aircraft comprising a fluid valve (50) according to either one of claims 1 to 2.

F i g . 1

F i g . 2

*Fig.3*

*F i g . 4*

*F i g . 5*

**Fig. 6**

**Fig. 7**

*Fig. 8*

*Fig. 9*

**F i g . 10**

**EP 3 527 865 B1**

## RÉFÉRENCES CITÉES DANS LA DESCRIPTION

**Documents brevets cités dans la description**

- US 20040163721 A1
- US 2526709 A
- US 4445528 A